Europäisches Patentamt

European Patent Office

Office européen des brevets

(19)

(11) Veröffentlichungsnummer : **0 147 478**
**B1**

# EUROPÄISCHE PATENTSCHRIFT

(12)

(45) Veröffentlichungstag der Patentschrift :
06.05.87

(21) Anmeldenummer : 83113013.3

(22) Anmeldetag : 23.12.83

(51) Int. Cl.⁴ : **C 04 B 35/56**, **C 04 B 33/28**,
**B 28 B 1/26**

(54) Schlickergiessmasse zur Herstellung von Formkörpern als aus Siliciumcarbid.

(43) Veröffentlichungstag der Anmeldung :
10.07.85 Patentblatt 85/28

(45) Bekanntmachung des Hinweises auf die Patenterteilung : 06.05.87 Patentblatt 87/19

(84) Benannte Vertragsstaaten :
AT DE FR GB SE

(56) Entgegenhaltungen :
DE-A- 2 837 900
DE-A- 3 211 083
DE-B- 1 020 556
GB-A- 1 596 303

(73) Patentinhaber : Hoechst CeramTec Aktiengesellschaft
Wilhelmstrasse 14
D-8672 Selb (DE)

(72) Erfinder : Heuschmann, Georg
Elmstrasse 1
D-8590 Marktredwitz (DE)
Erfinder : Wedemeyer, Reinhard, Dipl.-Ing.
Gerhard-Hauptmann-Weg 8
D-8598 Waldershof (DE)

(74) Vertreter : Reuter, Johann-Heinrich, Dr. et al
HOECHST AKTIENGESELLSCHAFT Zentrale Patentabteilung Postfach 80 03 20
D-6230 Frankfurt/Main 80 (DE)

**Beschreibung**

Die Erfindung bezieht sich auf eine Schlickergießmasse zur Herstellung von Formkörpern aus Siliciumcarbid unter Verwendung von Graphit, Bindern, Stell- und Verflüssigungs-mitteln in einem flüssigen Medium. Dabei sollen die Zusätze zum Schlicker so ausgewählt werden, daß man mit möglichst geringen Anteilen an organischen Stoffen auskommt, was ein spezielles Herstellungsverfahren für solcher Art keramisch hergestellter Artikel, insbesondere Brenner, bedingt. Als Endprodukt erhält man ein mit Silicium infiltriertes Siliciumcarbid, bei der der Graphit bzw. Kohlenstoffpulver in Siliciumcarbid umgewandelt ist.

Die Schlickergußtechnik gehört in der Keramik nach wie vor zu den Standardformgebungsverfahren. Trotz aufwendigen Formbaues ist für bestimmte geometrische Körper, wenn dieser dünne, komplexe und gekrümmte Flächen oder Wände aufweist, nur dieses Herstellungsverfahren sinnvoll. Bei Formkörpern aus mit Silicium infiltrierten Siliciumcarbid muß bei dieser Art der Formgebung die Bindung im Rohzustand chemisch erfolgen. Dies geht aus einem solchen Schlickergußverfahren gemäß DE-PS 28 37 900 hervor. Zur weiteren Erhöhung der Grünfestigkeit wird dem Schlicker ein mit Wasser mischbares Harz zugesetzt, wie zum Beispiel Resol oder auch Phenolformaldehydharze.

Mit mehr oder weniger Schwierigkeiten lassen sich auch Melaminformaldehyd-, Harnstoff-, Formaldehyd- oder Epoxydharze, Polyester und dergleichen anwenden. Einige dieser Stoffe beeinflussen beträchtlich den pH-Wert des Schlickers, so daß ohne Einstellung des pH-Wertes die Zugabe eines dieser Harze zu einem Ansteigen des pH-Wertes in einem solchen Maße führen kann, daß die Viskosität des Schlickers bis zu einem solchen Punkt ansteigt, daß er nicht mehr gießfähig ist. Die Grünfestigkeit kann weiterhin auch dadurch gesteigert werden, in dem man den Grünkörper an Luft erhitzt, wodurch eine feuerfeste Bindung erzeugt wird, wenn man Stoffe zugesetzt hat, die unter Bildung einer glasigen Phase, z. B. aus $B_2O_3$, $SiO_2$ oder $TiO_2$, mit den anderen Feststoffteilchen reagieren. Danach wird der gehärtete Grünkörper gebrannt, so daß sich das Harz verkokt. Es folgt dann das Sintern und die Silicierung zu einem mit Silicium infiltrierten Siliciumcarbidkörper, wobei gleichzeitig der Kohlenstoff in Siliciumcarbid übergeführt wird. Zur Aushärtung des Harzes im Schlicker bedarf es einer Temperaturbehandlung. Nachteilig ist es besonders, daß nach der Aushärtung die Gipsformen zerstört werden müssen, um den Grünkörper zur entnehmen, was zu beträchtlichen Kosten in der Fertigung führt.

Ein anderes Verfahren zur Herstellung von SiC-Gießschlicker geht aus der DE-A-30 37 312 hervor, indem man einen Schlicker, der entsprechend Siliciumcarbid und Kohlenstoffpulver enthält, in eine poröse Form gießt, indem man innerhalb der Form einen Kern aus einem Material vorsieht, der seine Form während des Gießens beibehält, jedoch durch Schrumpfen des gegossenen Körpers beim Trocknen verdichtet wird und anschließend aus dem gegossenen Körper entfernbar ist. Dem Gießschlicker, der 70 % Feststoffe enthält, wird ein Entflockungsmittel zugegeben, und zwar auf der Basis einer polymeren Carbonsäure. Die Mischung wird dann in einer Kugelmühle gemahlen und nach dem Absieben der groben Bestandteile wird der Schlicker evakuiert, um ihn zu entgasen.

Die Aufgabe der Erfindung besteht darin, einen SiC-Gießschlicker zu schaffen, dessen organische Bestandteile unter 1 Gew.-% liegen, wodurch ein Verkokungsbrand eingespart werden soll. Gleichzeitig soll die Grünfestigkeit möglichst hoch sein, damit eine mechanische Bearbeitung des Körpers im Grünzustand erfolgen kann. Ferner muß für das spätere Sintern und Silicieren ein weiteres Bindemittel gefunden werden, das für eine ausreichende Festigkeit im Körper für den Temperaturbereich von über 300 °C bewirkt. Ferner ist ein Verfahren anzugeben, mit dem sich diese spezielle SiC-Schlickergießmasse herstellen läßt.

Zur Lösung dieser Aufgabe wird erfindungsgemäß vorgeschlagen, daß der Schlicker aus verschiedenen Kornfraktionen von Siliciumcarbid-Pulvern mit Gewichtsanteilen zwischen 48 bis 65 %, einem Graphit-bzw. Kohlenstoffanteil von 6 bis 9,5 Gew.-% und 28 bis 40 % Gewichtsteilen Wasser besteht, wobei als Verflüssiger 0,15 bis 0,35 Gew.-% eines Melaminformaldehydharzes, als Bindemittel 0,01 bis 0,40 Gew.-% Polysaccharid und 1,00 bis 1,75 Gew.-% Borsäure, als Stellmittel 0,10 bis 0,25 Gew.-% Ammoniumalginat zugegeben ist, wobei der pH-Wert mit 0,06 bis 0,12 Gew.-% einer Natronlauge eingestellt ist.

Durch den Zusatz von 1,00 bis 1,75 Gew.-% Borsäure und einer darauf speziell abgestimmten Kombination an organischen Zusätzen, wobei letztere bezogen auf die gesamte Schlickergießmasse unter 1 % liegen und eine Reaktion der einzelnen Zusatzmittel untereinander durch Anhebung des pH-Wertes auf 7 $\pm$ 0,5 durch einwertige Salze vermieden wird, erhält man einen optimalen SiC-Gießschlicker, der auch nicht mit den Gipsformen reagiert. Als Verflüssiger wird 0,15 bis 0,35 Gew.-% Melaminformaldehydharz verwendet, das ein modifiziertes Kondensationsprodukt aus Melamin und Formaldehyd ist. Ein solcher Verflüssiger ist in Wasser mischbar und bildet einen Gleitfilm bzw. Schmierfilm aus, wodurch die Reibung zwischen den Feststoffteilen herabgesetzt ist. Daneben wirkt er auch noch als Erhärtigungsbeschleuniger und als temporärer Binder. Die Eigenschaften dieses Verflüssigers werden in der Zeitschrift « Zement, Kalk, Gips » (1969), Seite 415 bis 419, eingehend beschrieben. Als Bindemittel werden 0,01 bis 0,40 Gew.-% organische Polymere auf der Basis von linearen, hochmolekularen Polysacchariden und 1,00 bis 1,75 Gew.-% Borsäure verwendet. Ersteres Mittel wirkt sich auch stabilisierend auf den Gießschlicker aus. Als Stellmittel wird insbesondere 0,10 bis 0,25 Gew.-% Ammoniumalginat eingesetzt.

das einen geringen Aschegehalt aufweist. Diese Substanz hat einen pH-Wert von ca. 6 und die 1 %ige Lösung eine Viskosität von 125 mpa · s. Um einen möglichst neutralen SiC-Gießschlicker zu erhalten, hat sich die Zugabe von konz. NaOH, mit 0,06 bis 0,12 Gew.-% praktisch erwiesen.

Für den Schlickerguß zu verwendende Siliciumcarbidpulver soll vorzugsweise aus zwei Faktoren bestehen, wobei der Anteil je zur Hälfte mit einer Kornverteilung zwischen 30 bis 120 µm und der andere Anteil eine Kornverteilung zwischen 3 bis 15 µm aufweisen soll.

Eine andere ebenfalls gute SiC-Schlickergießmasse erhält man, wenn das Siliciumpulver aus drei Fraktionen besteht, wobei der erste Anteil von 30 bis 45 % eine Kornverteilung von 0 bis 60 µm, der zweite Anteil von 35 bis 50 % eine Kornverteilung von 7 bis 45 µm und der dritte Anteil von 5 bis 30 % eine Kornverteilung von 1 bis 8 µm besitzt.

Diese Binderkombination in Zusammenhang mit den spezifischen Kornfraktionen besitzt nicht nur einen niedrigen organischen Anteil, sondern wirkt auch gut auf die rheologischen und thixotropischen Eigenschaften des Schlickers aus, wobei auch eine Optimierung der Gründichte erreicht wird. Insbesondere weist der Schlicker eine gute Stabilität auf, was für konstante Dickenwandungen beim Gießen von rohrförmigen Körpern wichtig ist. Auch wird mit den erfindungsgemäßen Zusätzen zum Gießschlicker erreicht, daß die eingesetzten Gießformen wieder verwendet werden können. Außerdem bedürfen die Grünkörper keinerlei Temperaturbehandlung, um nach dem Antrocknen aus der Gipsform entnommen zu werden, da die Grünkörper eine hohe Festigkeit besitzen und somit auch diesen Zustand mit Werkzeugen bearbeitet werden können. Im Gegensatz zu der Aussage, daß das Melaminformaldehyd zum Ansteigen des pH-Wertes führt und somit auch die Gießeigenschaften des Schlickers verschlechtert, bringt das eingesetzte Melaminformaldehyd einen Verflüssigungseffekt. Als überraschend ist auch anzusehen, daß es durch die Zugabe von Natronlauge zu keinem weiteren Ansteigen des pH-Wertes kommt. Durch den Zusatz von einwertigen Salzen und die Anhebung des pH-Wertes auf den Neutralisationspunkt werden Reaktionen mit den Kationen verhindert. Insbesondere war zu erwarten, daß wässrige Borsäure-Lösungen mit den organischen Zusätzen reagieren. Es sind nun aber solche Stoffe gefunden worden, die den schädlichen Eigenschaften der Borsäure im flüssigen Medium entgegenwirken, so daß man die Borsäure als temporären Binder auch bereits im Gießschlicker nutzen kann, zumal dieser Stoff bei etwa 450 °C in die Schmelzphase übergeführt wird und dann zu einer Bindung mit den anderen Feststoffteilchen führt. Insgesamt kann festgestellt werden, daß der geringe organische Anteil unter 1 % es möglich macht, daß ein Verkokungsvorgang beim Sintern nicht mehr notwendig ist.

Die betriebliche Kontrolle des Schlickers bezieht sich als erstes auf den Wassergehalt, der zwischen 28 und 40 % liegt, so dann auf seine Viskosität und Thixotropie, die mit dem Lehmann-Auslaufviskosimeter bestimmt wird, aber auch auf ein häufiges Messen der Auslaufzeit und der Bestimmung des Litergewichtes und der Scherbenbildung in einer Gipsform. Im einzelnen ergeben sich folgende Werte : pH-Wert zwischen 7 ± 0,5, eine Auslaufzeit von 20 ± 5 s, einen Thixotropiewert von 15 % ± 5 % und ein Litergewicht von 1750 ± 50 g. Dadurch wird erreicht, daß der Grünkörper eine Dichte zwischen 1,6 bis 1,9 g/cm$^3$ besitzt, wobei die Trockenschwindung zwischen 1,0 bis 1,5 % liegt.

Als Ausgangsmaterial für die herzustellenden Gießschlicker wird Siliciumcarbid verwendet, wobei das Pulver eine Kornteilchengröße von 0 bis 120 µm hat. Der Feststoffanteil des Schlickers beträgt zwischen 60 und 72 %. Das speziell angepaßte erfindungsgemäße Verfahren für obengenannte SiC-Schlickergußmassen besteht darin, daß die organischen Bestandteile und die Borsäure in einem Mischgefäß mit Wasser vermischt werden, daraufhin das Silicium- und Graphitpulver der Zumischung zugeführt werden, danach die Natronlauge zugewogen wird und der so erhaltene Gießschlicker in cremiger Konsistenz in die Gipsformen gegossen wird. Nach einer bestimmten Standzeit, wobei in einer 1/4 h eine Scherbenstärke von ca. 2,5 mm erreicht wird, wird beim Hohlguß der noch flüssige Gießschlicker ausgegossen. Diese Grünkörper werden nach 1 bis 4 h ausgeformt und bei Temperaturen von ca. 50 °C mindestens 24 Stunden getrocknet. Dann erfolgt in Gegenwart von Silicium das Sintern, wobei der Graphit bzw. Kohlenstoff in Siliciumcarbid umgewandelt wird und gleichzeitig die Poren mit metallischem Silicium gefüllt werden.

Zweckmäßig ist es dabei, beim Schlickergießen die Gipsformen auf eine Rüttelvorrichtung zu setzen. Ferner empfiehlt es sich zur besseren Verfestigung des Scherbens beim Hohl- und/oder Kernguß den Schlicker mit Druck zu beaufschlagen, wobei mit möglichst geringem Anfangsdruck von 0,1 bis 3 bar und einem abschließenden Druck von 10 bis 50 bar gearbeitet wird.

Die Vorteile der Quirlaufbereitung bestehen in einem niedrigen Aggregataufwand und einer geringen Aufbereitungszeit gegenüber der Mahlaufbereitung. Insbesondere kommt kein Abrieb durch Mahlkörper und Mühlenauskleidung in den Schlicker. Durch die erfindungsgemäße Verfahrensweise ergibt sich auch eine Schlickerkonstanz von über einer Woche.

Die Erfindung wird nunmehr anhand von Ausführungsbeispielen in Verbindung mit dem erfindungsgemäßen Verfahren im einzelnen beschrieben :

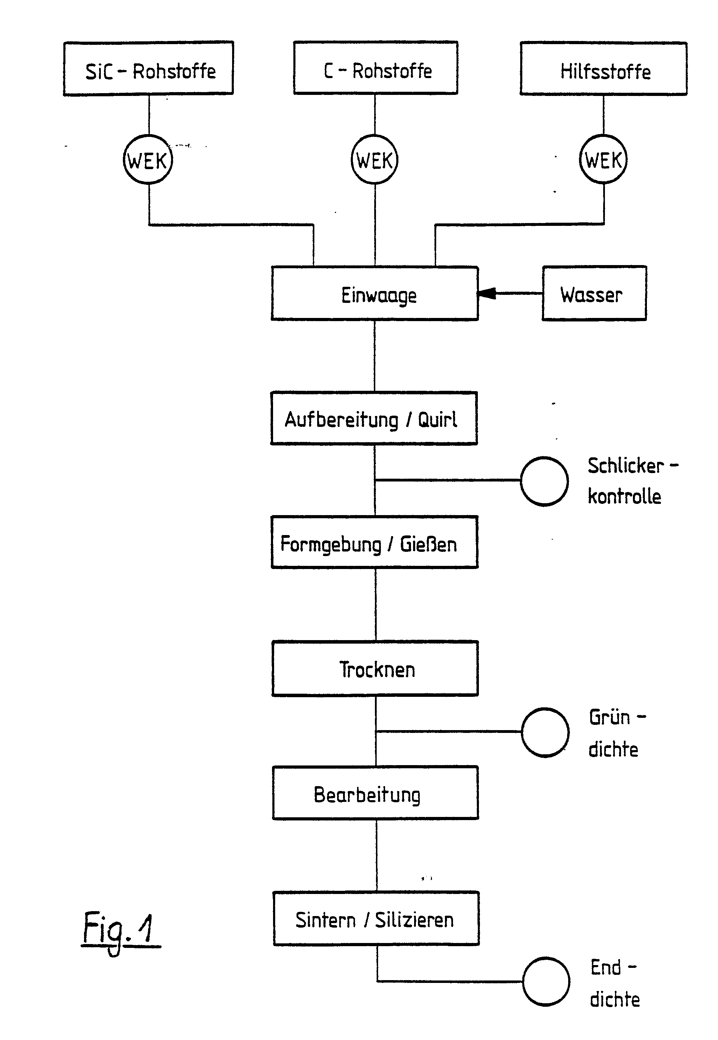

Figur 1 Flußdiagramm des erfindungsgemäßen Verfahrens.

Wie aus folgenden Versätzen hervorgeht, besteht die erfindungsgemäße Schlickergießmasse aus einer einheitlichen Mischung von Siliciumcarbid und Graphit bzw. Kohlenstoff, wobei entsprechende Zusätze zugegeben werden, um eine cremige Konsistenz zu erhalten und man anschließend den Schlicker in eine poröse Form gießt. Für die erfindungsgemäßen Gießschlicker eignen sich folgende Versätze :

## Beispiel 1

Die einzelnen Versatzkomponenten werden gewogen, wobei sich folgende Zusammensetzung ergibt:

| | | |
|---|---|---|
| SiC | Kornfraktion I (30 bis 120 µm) | 23,85 Gew.-% |
| SiC | Kornfraktion II (3 bis 15 µm) | 23,85 Gew.-% |
| Graphit | | 9,50 Gew.-% |
| Melaminformaldehyd | | 0,35 Gew.-% |
| Ammoniumalginat | | 0,24 Gew.-% |
| Polysaccharid | | 0,40 Gew.-% |
| Borsäure | | 1,75 Gew.-% |
| Natronlauge konz. | | 0,06 Gew.-% |
| Wasser | | 40,00 Gew.-% |

Im Gießschlicker werden dabei folgende Werte festgestellt:

| | |
|---|---|
| pH-Wert | 6,5 ± 0,1 |
| Auslaufzeit | 15 s |
| Thixotropie | 10 % |
| Litergewicht | 1 700 g/cm$^3$ |

In Vorversuchen hat sich herausgestellt, daß Aluminiumphosphat, Chromphosphat und Phosphorsäure eine Reaktion zwischen der Gießmasse und der Gipsform bewirkt, so daß das Entformen unmöglich gemacht wurde. Ferner wurde festgestellt, daß durch die Anwesenheit der Borsäure die üblichen Verflüssigungsmittel keinen Effekt brachten, erst mit Melaminformaldehyd wurde die entsprechende Wirkung erzielt, wobei als willkommener Nebeneffekt dazu noch eine deutliche Erhöhung der temporären Bindung ausgemacht werden konnte, was sich letztlich günstig auf eine nachfolgende Grünbearbeitung auswirkt. Von den vielen bekannten Stellmitteln, wie Natrium-carboxomethylcellulose, Polyvinylalkohol etc. erwies sich nur Ammoniumalginat als ausreichend, wobei die Gelbildung über die Änderung des pH-Wertes in die gewünschte Richtung gesteuert wurde. Es zeigte sich aber, daß bei entsprechend dicken Scherben eine Rißbildung beim Antrocknen auftrat, erst der Zusatz von hochmolekularen Polysaccharid brachte den gewünschten Erfolg, und zwar nicht nur eine Gelierung zu verhindern, sondern auch dem Schlicker eine niedrige Thixotropie zu geben.

## Beispiel 2

Die gleichen Binde- und Stellmittel wie im Beispiel 1 werden auch hier verwendet, nur erfolgt die Zugabe von Siliciumcarbidpulver nicht in zwei Fraktionen, sondern in drei Fraktionen. Der Versatz sieht nun wie folgt aus:

| | | |
|---|---|---|
| SiC | Kornfraktion I (0 bis 60 µm), ⌀ 45 µm | 21,96 Gew.-% |
| SiC | Kornfraktion II (7 bis 45 µm), ⌀ 15 µm | 24,62 Gew.-% |
| SiC | Kornfraktion III (1,5 bis 8 µm), ⌀ 3 µm | 8,39 Gew.-% |
| Graphit | | 8,30 Gew.-% |
| Melaminformaldehyd | | 0,25 Gew.-% |
| Ammoniumalginat | | 0,13 Gew.-% |
| Polysaccharid | | 0,03 Gew.-% |
| Borsäure | | 1,42 Gew.-% |
| Natronlauge konz. | | 0,08 Gew.-% |
| Wasser | | 34,82 Gew.-% |

Als besonders vorteilhaft hat sich Xanthan-Gummi erwiesen, der zu den hochmolekularen Polysacchariden zu rechnen ist. Beim Gießschlicker wurden folgende Eigenschaften gemessen:

| pH-Wert | | $7,0 \pm 0,1$ |
|---|---|---|
| Auslaufzeit | | $25 \pm 2,5$ s |
| Thixotropiewert | | $15 \% \pm 1,5 \%$ |
| Litergewicht | | $1\ 750 \pm 5$ g |

## Beispiel 3

Um den Feststoffgehalt der Schlickergießmasse zu erhöhen, muß entsprechend der Borsäure-Anteil aufgrund des niedrigen Wassergehaltes erniedrigt und der Anteil des Stellmittels erhöht werden, wobei Ammoniumalginat auch durch Polyglycol oder Methylcellulose ersetzt werden kann. Im einzelnen werden folgende Mischungen zusammengewogen :

| SiC | Kornfraktion I (0 bis 60 µm), $\varnothing$ 45 µm | 25,20 Gew.-% |
|---|---|---|
| SiC | Kornfraktion II (7 bis 45 µm), $\varnothing$ 15 µm | 33,07 Gew.-% |
| SiC | Kornfraktion III (1,5 bis 8 µm), $\varnothing$ 3 µm | 6,20 Gew.-% |
| Graphit | | 6,00 Gew.-% |
| Melaminformaldehyd | | 0,15 Gew.-% |
| Ammoniumalginat | | 0,25 Gew.-% |
| Polysaccharid | | 0,01 Gew.-% |
| Borsäure | | 1,00 Gew.-% |
| Natronlauge konz. | | 0,12 Gew.-% |
| Wasser | | 28,00 Gew.-% |

Der Gießschlicker wies folgende Eigenschaften auf :

| pH-Wert | | $7,5 \pm 0,1$ |
|---|---|---|
| Auslaufzeit | | 25 s |
| Thixotropie | | 20 % |
| Litergewicht | | 1 800 g/cm$^3$ |

Weitere Versuche gemäß den Beispielen 2 und 3 haben gezeigt, daß die Anteile der einzelnen Kornfraktionen in weiten Bereichen variieren können, und zwar bei der Kornfraktion 1 zwischen 30 bis 45 Gew.-%, bei der Kornfraktion II zwischen 35 bis 50 Gew.-% und bei der Kornfraktion III zwischen 5 bis 30 Gew.-%, ohne daß die Schlickerqualität erheblich darunter leidet.

Dagegen dürfen beim Verfahren die einzelnen Schritte nicht variiert werden, da sich sonst die beschriebene Qualität des Schlickers mit seinen optimalen Eigenschaften nicht reproduzierbar herstellen läßt. Gemäß Fig. 1 besteht ein typisches Verfahren zur Herstellung keramischer Brenner der erfindungsgemäßen Gießschlickermasse darin, daß zuerst die Einwaage des Wassers in einem Rührgefäß erfolgt. Die pulverförmigen Rohstoffe werden wie vorstehend gezeigt in einer geeigneten Menge abgewogen. Anschließend werden die Borsäure, Stell- und Bindemittel zugegeben, wobei ein kurzfristiges Aufquirlen der Dispersion durchgeführt wird. Daraufhin werden stufenweise Graphit bzw. Kohlenstoff und Siliciumcarbid zugegeben. Der pH-Wert wird dann mittels NaOH-Zugabe eingestellt. Dabei soll in der Gipsform die Scherbenbildung 3 mm/20 min. Standzeit betragen. Zuvor erfolgt das Absieben des Schlickers auf einem 100-Maschensieb und das Gießen in den entsprechend porösen Formen, insbesondere Gipsformen. Bei einem Hohlkörper wird nach einer Standzeit von ca. 15 Minuten der restliche Gießschlicker ausgegossen, nach etwa 1 bis 4 Stunden kann der Rohling aus der Form entnommen werden, um anschließend im Trockenschrank bei 50 °C getrocknet zu werden. Die Grünbearbeitung, das Silicieren und Sintern erfolgt nach dem bekannten Verfahren. Wichtig ist dabei, daß der Gießschlicker auf die vorgegebenen Werte kontrolliert wird, um eine weitgehende Schlickerkonstanz zu erreichen.

## Patentansprüche

1. Schlickergießmasse zur Herstellung von Formkörpern aus Siliciumcarbid unter Verwendung von Siliciumcarbid, Graphit, Bindern, Stell- und Verflüssigungsmitteln in ein flüssiges Medium, dadurch gekennzeichnet, daß der Schlicker aus verschiedenen Kornfraktionen von Siliciumcarbid-Pulvern mit Gewichtsanteilen zwischen 48 bis 65 %, einem Graphit- bzw. Kohlenstoffanteil von 6 bis 9,5 Gew.-% und 28 bis 40 % Gewichtsteilen Wasser besteht, wobei als Verflüssiger 0,15 bis 0,35 Gew.-% eines Melaminformaldehydharzes, als Bindemittel 0,01 bis 0,40 Gew.-% Polysaccharid und 1,00 bis 1,75 Gew.-% Borsäure, als Stellmittel 0,10 bis 0,25 Gew.-% Ammoniumalginat zugegeben ist, wobei der pH-Wert mit 0,06 bis 0,12 Gew.-% einer Natronlauge eingestellt ist.

2. Schlickergießmasse nach Anspruch 1, dadurch gekennzeichnet, daß das SiC-Pulver aus zwei Fraktionen besteht, und zwar je zur Hälfte mit einer Korngrößenverteilung zwischen 30 bis 120 μm und 3 bis 15 μm.

3. Schlickergießmasse nach Anspruch 1, dadurch gekennzeichnet, daß das SiC-Pulver aus drei Fraktionen besteht, wobei der erste Anteil von 30 bis 45 Gew.-% eine Korngrößenverteilung von 0 bis 60 μm, der zweite Anteil von 35 bis 50 Gew.-% eine Kornverteilung von 7 bis 45 μm und der dritte Anteil von 5 bis 30 Gew.-% eine Kornverteilung von 1 bis 8 μm besitzt.

4. Schlickergießmasse nach einen der Ansprüche 1 bis 3, dadurch gekennzeichnet, daß die Schlicker einen pH-Wert zwischen 7,0 ± 0,5, eine Auslaufzeit von 20 ± 5 s, einen Thixotropiewert von 15 % ± 5 % und ein Litergewicht von 1 750 ± 50 g aufweist und der Grünkörper eine Dichte zwischen 1,6 bis 1,9 g/cm$^3$ besitzt, wobei die Trockenschwindung zwischen 1,0 bis 1,5 % liegt.

5. Verfahren zur Herstellung von SiC-Formkörpern mittels einer Schlickergießmasse und einer Quirlaufbereitung nach einem der Ansprüche 1 bis 4, dadurch gekennzeichnet, daß die organischen Bestandteile und die Borsäure in einem Mischgefäß mit Wasser vermischt werden, daraufhin die SiC- und Graphitpulver dieser Zusammenmischung zugerührt werden, danach die Natronlauge zugewogen wird, worauf der so erhaltene Gießschlicker in Gipsformen gegossen wird, nach einer Antrocknungszeit von 1 bis 4 h der Grünkörper entformt wird, in einer Trockenkammer bei ca. 50 °C mindestens 24 h getrocknet wird, und das Sintern erfolgt in Gegenwart von Silicium, wobei der Graphit in Siliciumcarbid umgewandelt wird.

6. Schlickergießverfahren nach Anspruch 5, dadurch gekennzeichnet, daß die Gipsformen beim Eingießen auf eine Rüttelvorrichtung gesetzt werden.

7. Schlickergießverfahren nach Anspruch 5, dadurch gekennzeichnet, daß zur besseren Verfestigung des Scherbens beim Hohl- und/oder kernguß der Schlicker mit einem Anfangsdruck von 0,1 bis 3 bar in den Formenhohlraum eingespritzt wird und der Druck anschließend um ein Mehrfaches bis auf 10 bis 50 bar gesteigert wird, wobei dieser bis zur endgültigen Ausbildung der Scherbenstärke gehalten wird.

**Claims**

1. Slip casting composition for producing shaped bodies of silicon carbide with the use of silicon carbide, graphite, binders, floating agents and liquefying agents in a liquid medium, wherein the slip consists of silicon carbide powders of different grain fractions amounting to 48 to 65 mol-%, a graphite, resp. carbon portion amounting to 6 to 9.5 wt.-% and water in an amount of from 28 to 40 wt.-%, the liquefying agent being a melamin-formaldehyde-resin added in an amount of 0.15 to 0.35 wt.-% the binder being a polysaccharide added in an amount of 0.01 to 0.40 wt.-% together with 1.0 to 1.75 wt.-% of boric acid and the floating agent being ammonium alginate added in an amount of 0.10 to 0.25 wt.-% and the pH-value having been adjusted by the addition of 0.06 to 0.12 wt.-% of sodium hydroxide solution.

2. Slip casting composition as claimed in claim 1, wherein the silicon carbide powder consists of two fractions, one half having a grain size distribution between 30 an 120 μm and the other half a grain size distribution of 3 to 15 μm.

3. Slip casting composition as claimed in claim 1, wherein the silicon carbide powder consists of three fractions, the first fraction of 30 to 45 wt.-% having a 30 grain size distribution of 0 to 60 μm, the second fraction of 35 to 50 wt.-% having a grain size distribution of 7 to 45 μm and the third fraction of 5 to 40 wt.-% having a grain size distribution of 1 to 8 μm.

4. Slip casting composition as claimed in anyone of claims 1 to 3, wherein the slip has a pH-value of 7.0 ± 0.5, an efflux time of 20 ± 5 seconds, a thixotropic value of 15 % ± 5 % and a weight per litre of 1 750 ± 50 g and the green body having a density between 1.6 and 1.9 g/cm$^3$, the drying shrinkage being between 1.0 and 1.5 %.

5. Process for producing shaped SiC-bodies from a slip casting composition by a blunger treatment as claimed in anyone of claims 1 to 4, which comprises mixing the organic components and the boric acid with water, in a mixing vessel, subsequently adding the SiC powder and graphite powder to this mixture under stirring, then adding the hydroxide solution under weighing, pouring the resulting slip casting composition into plaster molds, opening the molds after a drying time of 1 to 4 hours to remove the green body and drying the latter in a drying chamber at a temperature of about 50 °C for at least 24 hours, the sintering step being conducted in the presence of silicon, whereby the graphite is converted into silicon carbide.

6. Process as claimed in claim 5, wherein the plaster molds are placed on a vibrator during the pouring step.

7. Process as claimed in claim 5, which comprises injecting the slip into the cavity of the mold with a starting pressure of 0.1 to 3 bars for improving the fastening of the body in the case of hollow casting and/or cored casting and subsequently increasing the pressure significantly up to 10 to 50 bars. this pressure being maintained until the body has its final thickness.

**Revendications**

1. Composition pour coulée en barbotine, pour la fabrication d'objets moulés en carbure de silicium. sous utilisation de carbure de silicium, de graphite, de liants. d'agents de fixation et de fluidifiants, dans un milieu liquide, caractérisée en ce que la barbotine est constituée de différentes fractions granulométriques de poudres de carbure de silicium pour un pourcentage pondéral compris entre 48 et 65 %, d'une fraction graphite ou carbone pour 6 à 9,5 %, et de 28 à 40 % en poids d'eau. par addition, à titre de fluidifiant, de 0,15 à 0,35 % en poids d'une résine mélamine-formaldéhyde, de 0,01 à 0,40 % en poids d'un polysaccharide et de 1,00 à 1,75 % en poids d'acide borique à titre de liant, et de 0,10 à 0,25 % en poids d'alginate d'ammonium en tant qu'agent de fixation, le pH étant ajusté à l'aide de 0,06 à 0,12 % en poids d'une lessive de soude.

2. Composition pour coulée en barbotine selon la revendication 1, caractérisée en ce que la poudre de SiC est constituée de deux fractions, chacune comptant pour une moitié, l'une ayant une répartition granulométrique comprise entre 30 et 120 μm, et l'autre entre 3 et 15 μm.

3. Composition pour coulée en barbotine selon la revendication 1, caractérisée en ce que la poudre de SiC est constituée de trois fractions, savoir une première fraction, pour 30 à 45 %, ayant une répartition granulométrique de 0 à 60 μm, une deuxième fraction, pour 35 à 50 % en poids, ayant une répartition granulométrique de 7 à 45 μm, et une troisième fraction, pour 5 à 30 % en poids, ayant une répartition granulométrique de 1 à 8 μm.

4. Composition pour coulée en barbotine selon l'une des revendications 1 à 3, caractérisée en ce que la barbotine a un pH de $7,0 \pm 0,5$, un temps d'écoulement de $20 \pm 5$ s, un indice de thixotropie de $15 \pm 5$ % et une masse volumique de $1\,750 \pm 50$ g/dm$^3$, l'objet à l'état vert ayant une masse volumique comprise entre 1,6 et 1,9 g/cm$^3$, le retrait au séchage étant compris entre 1,0 et 1,5 %.

5. Procédé pour la fabrication d'objets moulés en SiC, à l'aide d'une composition pour coulée en barbotine et d'un traitement par mélange, selon l'une des revendications 1 à 4, caractérisé en ce qu'on mélange à de l'eau, dans un mélangeur, les constituants organiques et l'acide borique, puis qu'on ajoute à ce mélange, sous agitation, la poudre de SiC et de graphite, puis qu'on pèse et ajoute la lessive de soude, ce après quoi la barbotine de coulée obtenue est coulée dans des moules en gypse, l'objet à l'état vert étant démoulé après un temps de séchage de 1 à 4 h, séché à l'étuve sèche à environ 50 °C pendant au moins 24 heures, le frittage s'effectuant en présence de silicium, le graphite étant converti en carbure de silicium.

6. Procédé de coulée en barbotine selon la revendication 5, caractérisé en ce que les moules en gypse, lors de la coulée, sont placés sur un dispositif à secousses.

7. Procédé de coulée en barbotine selon la revendication 5, caractérisé en ce que, pour mieux consolider la pâte lors de la coulée en moule creux et/ou en noyau. la barbotine est injectée dans les moules creux sous une pression initiale de 0,1 à 3 bar, la pression étant ensuite portée à un multiple jusqu'à 10 à 50 bar, cette dernière pression étant maintenue jusqu'à ce que la pâte atteigne son épaisseur définitive.

**Fig. 1**